(19)

Europäisches
Patentamt
European
Patent Office
Office européen
des brevets

(11) **EP 2 458 363 B1**

(12) **EUROPÄISCHE PATENTSCHRIFT**

(45) Veröffentlichungstag und Bekanntmachung des
Hinweises auf die Patenterteilung:
**11.11.2015 Patentblatt 2015/46**

(51) Int Cl.:
***G01M 11/02*** *(2006.01)*

(21) Anmeldenummer: **11009187.3**

(22) Anmeldetag: **19.11.2011**

(54) **Messung der Positionen von Krümmungsmittelpunkten optischer Flächen eines mehrlinsigen
optischen Systems**

Measurement of the positions of curvature midpoints of optical areas of a multi-lens optical system

Mesure des positions de centres de courbures de surfaces optiques d'un système optique à plusieurs
lentilles

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **29.11.2010 DE 102010053422**

(43) Veröffentlichungstag der Anmeldung:
**30.05.2012 Patentblatt 2012/22**

(73) Patentinhaber: **Trioptics GmbH
22880 Wedel (DE)**

(72) Erfinder:
 • **Heinisch, Josef
  22880 Wedel (DE)**
 • **Krey, Stefan
  25421 Pinneberg (DE)**
 • **Dumitrescu, Eugen
  22880 Wedel (DE)**

 • **Ruprecht, Aiko
  22880 Wedel (DE)**
 • **Langehanenberg, Patrik
  22607 Hamburg (DE)**

(74) Vertreter: **Schwanhäußer, Gernot et al
Ostertag & Partner
Patentanwälte mbB
Epplestraße 14
70597 Stuttgart (DE)**

(56) Entgegenhaltungen:
**DE-A1-102004 029 735**

 • **Allain Courteville ET AL: "Non-contact in-
process metrology using a high-accuracy lowcoherence interferometer", , 31. Mai 2006
(2006-05-31), Seiten 1-11, XP55021154, Gefunden
im Internet: URL:http://www.fogale.fr/~fogaleco/
media/a rticles_LISE/LAMDAMAP_2005.pdf
[gefunden am 2012-03-07]**

EP 2 458 363 B1

**Beschreibung**

HINTERGRUND DER ERFINDUNG

1. Gebiet der Erfindung

Die Erfindung betrifft ein Verfahren und eine Vorrichtung zur Messung der Positionen von Krümmungsmittelpunkten optischer Flächen eines mehrlinsigen optischen Systems.

2. Beschreibung des Standes der Technik

Bei der Fertigung von qualitativ hochwertigen mehrlinsigen optischen Systemen müssen die Linsen mit hoher Genauigkeit zueinander ausgerichtet werden. Um eine solche Ausrichtung durchführen zu können, ist es erforderlich, die Positionen der optischen Flächen messtechnisch zu bestimmen. Selbst wenn während der Justierung der Linsen auf eine Überprüfung der Positionsgenauigkeit verzichtet wird, so werden solche Messungen zumindest im Rahmen der Qualitätskontrolle regelmäßig durchgeführt.

Eine entscheidende geometrische Größe bei der Vermessung mehrlinsiger optischer Systeme sind die Positionen der Krümmungsmittelpunkte der optischen Flächen. Idealerweise liegen die Krümmungsmittelpunkte exakt auf einer gemeinsamen Referenzachse, die in der Regel mit den Symmetrieachsen der die Linsen aufnehmenden Linsenfassungen zusammenfallen sollte. In realen optischen Systemen liegen die Krümmungsmittelpunkte jedoch infolge von Fertigungs- und Montagetoleranzen statistisch um diese Referenzachse herum verteilt. Sind die Abstände der Krümmungsmittelpunkte von der Referenzachse zu groß, so verschlechtern sich die Abbildungseigenschaften des optischen Systems in untolerierbarer Weise.

Aus der DE 10 2004 029 735 A1 ist ein Verfahren zur Messung von Krümmungsmittelpunkten optischer Flächen eines mehrlinsigen optischen Systems bekannt. Bei diesem Verfahren werden die Positionen der Krümmungsmittelpunkte der einzelnen optischen Flächen sukzessive mit Hilfe eines Autokollimators gemessen. Die erste Fläche, für welche die Position des Krümmungsmittelpunkts vermessen wird, ist diejenige Fläche, die dem Autokollimator am nächsten liegt. Sobald die Position des Krümmungsmittelpunkts dieser ersten Fläche bestimmt wurde, wird die darauf folgende zweite Fläche vermessen. Die erste Fläche beeinflusst allerdings die Vermessung der zweiten Fläche. Deswegen muss die optische Wirkung der ersten Fläche bei der Bestimmung der Position des Krümmungsmittelpunkts der zweiten Fläche rechnerisch berücksichtigt werden. Bei der Berücksichtigung der optischen Wirkung der ersten Fläche wird auf die Designdaten der ersten Fläche zurückgegriffen, und zwar insbesondere auf den Soll-Krümmungsradius und den Soll-Abstand zur zweiten Fläche (d. h. der Mittendicke der ersten Linse). Rechnerisch berücksichtigt wird außerdem die zuvor gemessene Position des Krümmungsmittelpunkts der ersten Fläche.

Bei allen weiteren Flächen wird in gleicher Weise vorgegangen. Bei der rechnerischen Auswertung werden somit stets die gemessenen Positionen der Krümmungsmittelpunkte aller vorausliegenden optischen Flächen und ansonsten die Designdaten berücksichtigt.

Aus dem Aufsatz von A. Courteville et al. mit dem Titel "Non-contact in-process metrology using a high accuracy low coherence interferometer", Laser and Machine Performance VII, 7th International Conference and Exhibition on Laser Metrology, Machine Tool, CMM and Robotic Performance Lamdamap 2005, Seiten 534-544, 2005, ist ein Kurzkohärenz-Interferometer bekannt, das zur hochgenauen Messung von Abständen zwischen optischen Flächen geeignet ist.

ZUSAMMENFASSUNG DER ERFINDUNG

Aufgabe der Erfindung ist es, das bekannte Verfahren zur Messung der Positionen von Krümmungsmittelpunkten optischer Flächen eines mehrlinsigen optischen Systems mit dem Ziel einer höheren Messgenauigkeit zu verbessern.

Erfindungsgemäß wird diese Aufgabe durch ein Verfahren mit den Merkmalen des Anspruchs 1 gelöst.

Es hat sich gezeigt, dass sich die Genauigkeit bei der Messung der Positionen der Krümmungsmittelpunkte erheblich steigern lässt, wenn bei der Bestimmung der optischen Wirkung der bereits vermessenen optischen Flächen nicht auf Soll-Abstände zwischen den Flächen, d. h. aus dem optischen Design abgeleitete Daten, zurückgegriffen wird, sondern diese Abstände mit hoher Genauigkeit unter Verwendung eines Interferometers gemessen werden. Während nämlich etwa die Krümmungsradien der optischen Flächen in der Regel mit sehr hoher Genauigkeit fertigungstechnisch realisiert werden können, gilt dies für die Mittendicken der Linsen nur eingeschränkt. Vor allem jedoch kommt es bei der Montage des optischen Systems häufig zu Justierfehlern bei der Einstellung der Luftabstände zwischen den Linsen.

Da die Ist-Abstände zwischen den optischen Flächen somit teilweise deutlich von den Soll-Abständen abweichen können, kann es dann, wenn nur die Soll-Abstände bei der rechnerischen Auswertung berücksichtigt werden, zu signifikanten Fehlern bei der Bestimmung der Positionen der Krümmungsmittelpunkte kommen.

Bei der Vermessung mehrlinsiger optischer Systeme tritt hier außerdem die Besonderheit hinzu, dass Messfehler bei der Vermessung einer optischen Fläche infolge des iterativen Auswertungsprozesses auf die Messgenauigkeit aller vom Winkelmesssystem aus gesehen dahinter liegenden optischen Flächen durchschlagen. Umgekehrt ausgedrückt gehen in den Messwert für die Position des Krümmungsmittelpunkts der vom Winkelmesssystem aus gesehen letzten Fläche des optischen Systems alle Messfehler der für das betreffende optische System durchgeführten Messungen kumulativ ein. Auf diese Weise können sich selbst kleinere Abweichungen der Ist-Abstände von den Soll-Abständen zumindest auf die Messgenauigkeit der vom Winkelmesssystem aus gesehen letzten optischen Flächen sehr ungünstig auswirken.

Durch die erfindungsgemäße Durchführung einer unabhängigen Messung der Abstände zwischen den optischen Flächen ist es möglich, bei der Bestimmung der Position des Krümmungsmittelpunkts einer bestimmten optischen Fläche nicht mehr auf die Soll-Abstände, sondern auf die tatsächlichen Ist-Abstände zwischen denjenigen Flächen zurückzugreifen, die zwischen dieser Fläche und dem Winkelmesssystem liegen. Dies führt, und zwar besonders bei optischen Systemen mit vielen optischen Flächen, zu einer erheblichen Steigerung der Messgenauigkeit vor allem für die "hinteren" optischen Flächen, d. h. diejenigen Flächen, zu deren Vermessung das Winkel-Messlicht sehr viele vorausliegende Flächen jeweils zweimal durchtreten muss.

Bei der Vermessung der Positionen der Krümmungsmittelpunkte in Schritt b) ist zu beachten, dass die optischen Flächen nicht in der Reihenfolge vermessen werden müssen, wie sie in dem optischen System angeordnet sind. Denn die rechnerische Berücksichtigung der optischen Wirkung der einer bestimmten Fläche vorausliegenden Flächen kann auch erst dann erfolgen, wenn alle Messdaten für das optische System aufgenommen wurden. Die Reihenfolge bei der Aufnahme der Messdaten kann daher auch nach anderen Kriterien in weiten Grenzen frei festgelegt werden.

Ein solches anderes Kriterium kann beispielsweise sein, die Messzeit möglichst kurz zu halten, indem die Verfahrwege optischer Komponenten in der Winkelmesseinrichtung minimiert werden. Handelt es sich bei der Winkelmesseinrichtung etwa um einen Autokollimator, so kann die Reihenfolge bei der Aufnahme der Messdaten derart festgelegt werden, dass die optischen Flächen nicht in der Reihenfolge ihrer Anordnung im optischen System, sondern in der Reihenfolge der Anordnung ihrer Krümmungsmittelpunkte durchgeführt wird. Zuerst vermessen wird dann z. B. nicht die dem Autokollimator am nächsten angeordnete optische Fläche, sondern diejenige Fläche, deren Krümmungsmittelpunkt dem Autokollimator möglichst nahe liegt. Als nächstes wird dann diejenige Fläche vermessen, deren Krümmungsmittelpunkt dem Autokollimator am zweitnächsten liegt, usw. Auf diese Weise muss die zur Fokussierung verwendete Zoomoptik des Autokollimators nur die aufeinander folgenden Soll-Positionen der Krümmungsmittelpunkte anfahren, wie sie sich aus den Designdaten des optischen Systems ergeben. Die Schritte a) und b) können auch vertauscht werden. Es werde dann zunächst unter Annahme der Soll-Abstände zwischen den Flächen die ungefähren Positionen aller Krümmungsmittelpunkte vorläufig gemessen, wie dies im Stand der Technik bislang der Fall war. Nach Messung der Abstände unter Verwendung des Interferometers werden diese Messwerte dann anschließend rechnerisch korrigiert, oder der Schritt b) wird wiederholt und die rechnerische Berücksichtigung der Abstände findet bei der Auswertung der zweiten Messung der Krümmungsmittelpunkte statt. Eine zweite Messung der Krümmungsmittelpunkte bei genauer Kenntnis der Ist-Abstände zwischen den optischen Flächen lässt sich häufig mit größerer Messgenauigkeit durchführen.

Die Messung der Abstände zwischen den Flächen unter Verwendung des Interferometers verbessert jedoch nicht nur die Genauigkeit bei der Vermessung der Positionen der Krümmungsmittelpunkte. Auch umgekehrt ermöglicht es die Messung der Positionen der Krümmungsmittelpunkte, die Abstände zwischen den Flächen genauer zu vermessen. Eine genaue Vermessung der Abstände zwischen den Flächen mit Hilfe des Interferometers gelingt nämlich nur, wenn das vom Interferometer auf die Flächen gerichtete Abstands-Messlicht senkrecht auf die zu vermessenden Flächen auftrifft. Bei einer nur leichten Verkippung der Flächen verringert sich die Intensität des von den Flächen in das Interferometer zurückreflektierten Lichts so erheblich, dass infolge des dann sehr kleinen Signal-Rausch-Verhältnisses keine oder allenfalls eine vergleichsweise ungenaue Messung möglich ist. Außerdem wird bei nicht senkrechtem Auftreffen des Abstands-Messlichts selbst dann, wenn das reflektierte Licht eine ausreichend hohe Intensität hat, letztlich nicht der eigentlich gewünschte Abstand zwischen den Flächen entlang der optischen Achse gemessen. Dies bleibt aber unbemerkt und ist deswegen besonders nachteilig.

Das Abstands-Messlicht trifft senkrecht auf die optischen Flächen auf, wenn die optische Achse des optischen Systems mit der Bezugsachse, entlang der die Abstände gemessen werden, fluchtet. Deswegen wird erfindungsgemäß vor der Messung der Abstände gemäß Schritt c) unter Verwendung der Winkelmesseinrichtung eine optische Achse des optischen Systems vorläufig bestimmt. Anschließend werden das optische System und das Interferometer so zueinander ausgerichtet, dass die vorläufig bestimmte optische Achse mit der Bezugsachse fluchtet. Im Allgemeinen wird dabei das optische System relativ zum feststehenden Interferometer justiert werden. Im Prinzip ist aber auch eine Justierung des Interferometers relativ zum feststehenden optischen System möglich.

Die optische Achse eines nicht perfekt justierten mehrlinsigen optischen Systems ist an und für sich gar nicht eindeutig definiert. Unter einer vorläufig bestimmten optischen Achse eines solchen Systems wird hier deswegen eine Achse verstanden, die gemäß einem vorab bestimmten Kriterium als vorläufige optische Achse definiert wurde. Dieses vorab bestimmte Kriterium beschreibt quantitativ die Eigenschaft, dass die vorläufig gemessenen Krümmungsmittelpunkte, etwa im Sinne einer Ausgleichsgeraden, (möglichst) nahe an dieser Achse liegen.

Um die optische Achse des optischen Systems vorläufig zu bestimmen, können in dem Schritt a) gemessene Positionen der Krümmungsmittelpunkte wie in Schritt d), aber unter Annahme der Soll-Abstände zwischen den Flächen, unter Verwendung der optischen Winkelmesseinrichtung gemessen und dann für die vorläufige Bestimmung der optischen Achse verwendet werden.

Die optische Achse kann beispielsweise vorläufig bestimmt werden, indem die Positionen der Krümmungsmittelpunkte zumindest einiger Flächen gemessen werden und die optische Achse durch eine Ausgleichsgerade durch die so bestimmten Krümmungsmittelpunkte festgelegt wird. Wenn nur zwei Flächen zur Bestimmung der vorläufigen optischen Achse verwendet werden, z. B. die erste und die letzte Fläche des optischen Systems, so geht die Ausgleichsgerade in eine Verbindungsgerade über.

Es ist auch möglich, einzelne Flächen bei der Festlegung der vorläufigen optischen Achse zu gewichten. In Betracht kommt etwa, die stärker brechenden Flächen, also die Flächen mit kleineren Krümmungsradien, stärker zu gewichten, da diese Flächen im Allgemeinen einen größeren Einfluss auf die optischen Eigenschaften des optischen Systems haben. Daneben kommt in Betracht, nur einzelne Abschnitte des optischen Systems bei der vorläufigen Bestimmung der optischen Achse zu berücksichtigen.

Eine andere Möglichkeit, die optische Achse vorläufig zu bestimmen, besteht darin, von einer Seite des optischen Systems Prüflicht einzukoppeln und auf der gegenüberliegenden Seite aus dem optischen System austretendes Prüflicht von einem Lichtsensor der Winkelmesseinrichtung ortsaufgelöst zu erfassen. Dabei wird ausgenutzt, dass bei dejustierten optischen Flächen das Prüflicht durch Brechung abgelenkt wird und deswegen den Lichtsensor nicht auf dem Durchstoßpunkt der Bezugsachse trifft.

Besonders effizient gelingt eine solche vorläufige Bestimmung der optischen Achse, wenn das optische System während des ortsaufgelösten Erfassens des Prüflichts um die Bezugsachse gedreht wird. Aus der Veränderung des Auftrefforts des Prüflichts auf dem Lichtsensor während der Drehung kann dann qualitativ auf die Abweichung der optischen Achse von der Bezugsachse geschlossen werden. Während der Drehung des optischen Systems bewegt sich der Auftreffort des Prüflichts auf dem Lichtsensor nämlich auf einer Kreisbahn. Eine optimale Ausrichtung des optischen Systems zur Bezugsachse ist dann erreicht, wenn der Radius der Kreisbahn minimal ist.

Das Prüflicht kann beispielsweise von einer in dem Interferometer angeordneten Lichtquelle erzeugt sein. Bei dieser Lichtquelle kann es sich um die ohnehin im Interferometer vorgesehene Lichtquelle für das Abstands-Messlicht oder um eine davon unabhängige Prüflichtquelle handeln.

Eine weitere Möglichkeit, das optische System vor Beginn der eigentlichen Messung der Krümmungsmittelpunkte zur Bezugsachse auszurichten, besteht darin, unter Verwendung der von der Winkelmesseinrichtung ermittelten Krümmungsmittelpunkte zu berechnen, welche Intensitäten von dem Interferometer erzeugtes Abstands-Messlicht nach Reflexion an den optischen Flächen hat, wenn die durch die Krümmungsmittelpunkte festgelegte vorläufig bestimmte optische Achse optimal mit der Bezugsachse fluchtet. Das optische System wird dann durch Verkippen und/oder Verschieben so ausgerichtet, dass die von dem Interferometer gemessenen Intensitäten den berechneten Intensitäten möglichst nahe kommen.

Bei einem Ausführungsbeispiel wird die Messung der Abstände in Schritt a) und die Messung der Positionen der Krümmungsmittelpunkte in Schritt b) von der gleichen Seite des optischen Systems aus durchgeführt. Dadurch lässt sich häufig ein kompakterer Aufbau der Messvorrichtung erzielen.

Das von dem Interferometer verwendete Abstands-Messlicht und von der Winkelmesseinrichtung verwendetes Winkel-Messlicht können dabei von der gleichen Fokussieroptik auf das optische System gerichtet werden.

Das erfindungsgemäße Verfahren gestattet es auch, bei asphärischen Flächen Positionen von Krümmungsmittelpunkten zu messen. Der Krümmungsmittelpunkt ist in diesem Fall nur bezüglich des sphärischen Anteils der asphärischen Fläche definiert. Bei einer asphärischen Fläche, die durch die übliche Asphärengleichung

$$z = \frac{ch^2}{1 + \sqrt{1 - (1 + k)\, c^2 h^2}} + $$
$$Ah^4 + Bh^6 + Ch^8 + Dh^{10} + Eh^{12} + Fh^{14} + Gh^{16} + Hh^{18} + Jh^{20}$$

beschreibbar ist, ist der Krümmungsmittelpunkt durch den Mittelpunkt einer Kugel mit dem Krümmungsradius R gegeben. In der Gleichung bezeichnet $z$ die Pfeilhöhe der betreffenden Fläche parallel zur optischen Achse, $h$ den radialen Abstand von der optischen Achse, $c = 1/R$ die Scheitelkrümmung der betreffenden Fläche, $k$ die konische Konstante und A, *B, C, D, E, F, G, H und J* Asphärenkonstanten. Die Lage einer Symmetrieachse, bezüglich der eine asphärische Fläche rotationssymmetrisch ist und auf welcher der Krümmungsmittelpunkt des sphärischen Anteils liegen kann, aber nicht notwendigerweise liegen muss, lässt sich durch das erfindungsgemäße Verfahren hingegen nicht ermitteln. Auch Planflächen lassen sich mit Hilfe des erfindungsgemäßen Verfahrens vermessen. Die Winkelmesseinrichtung liefert in diesem Fall allerdings keine Positionen von Krümmungsmittelpunkten, sondern die Winkel, welche die Planfläche zur Bezugsachse einschließt.

KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:

Figur 1     einen Meridionalschnitt durch ein mehrlinsiges optisches System, bei dem alle Linsen perfekt zu einer Referenzachse ausgerichtet sind;

Figur 2     eine einzelne Linse aus dem in der Figur 1 gezeigten optischen System, die jedoch gegenüber der Referenzachse verkippt ist;

Figur 3     eine schematische Darstellung der Krümmungsmittelpunkte eines mehrlinsigen optischen Systems;

Figur 4     eine schematische Darstellung wie in der Figur 3, wobei die Krümmungsmittelpunkte jedoch auf einer von der Referenzachse verschiedenen Geraden liegen;

Figur 5     einen Meridionalschnitt durch eine erfindungsgemäße Messvorrichtung gemäß einem ersten Ausführungsbeispiel;

Figur 6     einen Meridionalschnitt durch einen in der Messvorrichtung verwendeten Autokollimator bei der Vermessung einer exakt auf der Bezugsachse ausgerichteten Kugellinse;

Figur 7     den Autokollimator aus der Figur 6, jedoch mit dezentrierter Kugellinse;

Figur 8     einen Graphen, in dem die während einer Abstandsmessung von einem Photodetektor erfasste Intensität in Abhängigkeit von der optischen Weglänge aufgetragen ist, die von einem Referenzlichtstrahl eines Interferometers der Messvorrichtung zurückgelegt wird;

Figur 9     einen Meridionalschnitt durch eine erfindungsgemäße Messvorrichtung gemäß einem anderen Ausführungsbeispiel, bei dem das Interferometer und der Autokollimator auf der gleichen Seite des Prüflings angeordnet sind;

Figur 10    ein Flussdiagramm zur Erläuterung wichtiger Schritte des erfindungsgemäßen Verfahrens.

BESCHREIBUNG BEVORZUGTER AUSFÜHRUNGSBEISPIELE

*1. Einführung*

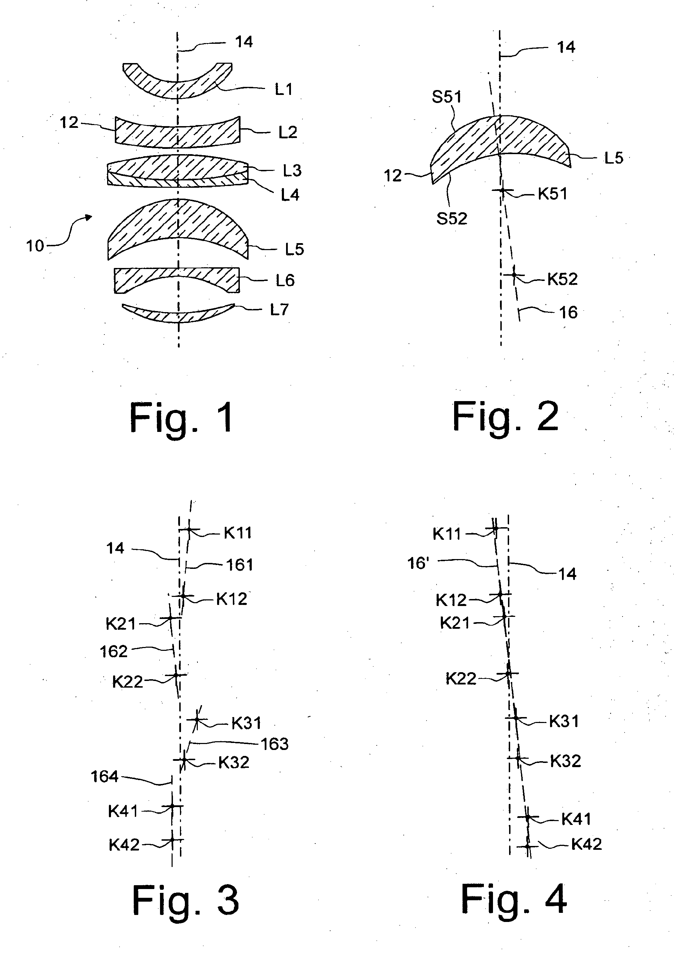

Die Figur 1 zeigt in einem Meridionalschnitt ein insgesamt mit 10 bezeichnetes optisches System, das sieben Linsen L1 bis L7 umfasst. Die beiden Linsen L3 und L4 sind dabei spaltfrei aneinandergefügt und bilden eine als Achromat verwendete Dublette. Die Linsen L1 bis L7 haben einen zylindrisch geschliffenen Linsenrand 12, der jeweils in einer nicht dargestellten Linsenfassung aufgenommen ist.
Im Idealfall sind die Linsen L1 bis L7 so ausgerichtet, dass ihre optischen Achsen alle auf einer gemeinsamen Referenzachse 14 liegen, die gleichzeitig die Symmetrieachse der zylindrischen Linsenränder ist. Die Referenzachse 14 wird dann im Allgemeinen als die optische Achse des optischen Systems 10 bezeichnet.
Bei realen optischen Systemen kommt es jedoch aufgrund von Fertigungs- und Montagetoleranzen zu Abweichungen von einer solchen idealen Ausrichtung. Die Figur 2 zeigt beispielhaft für die Linse L5, wie sich eine geringfügige (in der Figur 2 jedoch übertrieben dargestellte) Verkippung der Linse L5 in der Linsenfassung auf den Zentrierzustand auswirkt. Es sei hier angenommen, dass die beiden Linsenflächen S51 und S52 der Linse L5 sphärisch sind und Krümmungsmittelpunkte haben, die in der Figur 2 mit K51 bzw. K52 bezeichnet sind. Die Krümmungsmittelpunkte K51 und K52 legen die optische Achse der Linse L5 fest, die in der Figur 2 mit einer gestrichelten Linie 16 angedeutet ist. Infolge dieser Festlegung verläuft die optische Achse 16 stets senkrecht zu den sphärischen optischen Flächen S51, S52 der Linse L5.

Bei asphärischen Linsen ist die optische Achse durch die Krümmungsmittelpunkte des sphärischen Anteils der asphärischen Linsenflächen definiert.

Die Verkippung der Linse L5 kann beispielsweise dadurch hervorgerufen sein, dass die Linse L5 nicht korrekt in ihre Linsenfassung eingesetzt wurde. Als Ursache hierfür kommt etwa in Betracht, dass der Linsenrand 12 nicht so geschliffen wurde, dass seine Symmetrieachse mit der optischen Achse 16 der Linse L5 fluchtet.

Um die Linse L5 korrekt auf der Referenzachse 14 des optischen Systems 10 auszurichten, müsste die Linse L5 so verkippt und ggf. zusätzlich senkrecht zur Referenzachse 14 verschoben werden, dass die optische Achse 16 mit der Referenzachse 14 fluchtet, wie dies in der Figur 1 angenommen wurde.

Bei einem mehrlinsigen optischen System, wie es in der Figur 1 gezeigt ist, liegen die optischen Achsen der einzelnen Linsen im Allgemeinen je nach Qualität des Zentrierzustands mehr oder weniger unregelmäßig zur Referenzachse 14 verteilt. Dies ist beispielhaft in der Figur 3 für ein optisches System mit vier Linsen mit Krümmungsmittelpunkten K11, K12, K21, K22, K31, K32 und K41, K42 angedeutet; die optischen Achsen der vier Linsen sind mit 161, 162, 163, 164 bezeichnet. Um bei einem solchen optischen System die Zentrierung der Linsen zu verbessern, müssen mehrere Linsen verkippt und/oder translatorisch verlagert werden, damit alle optischen Achsen 161, 162, 163, 164 mit der Referenzachse 14 fluchten.

Gelegentlich kann es auch, wie die Figur 4 zeigt, vorkommen, dass zwar die optischen Achsen der Linsen (zumindest annähernd) auf einer gemeinsamen optischen Achse 16' angeordnet sind, diese jedoch nicht mit der Referenzachse 14 fluchtet. In einem solchen Fall kann es günstiger sein, die einzelnen Linsen nicht neu zu justieren, sondern das gesamte optische System so in eine übergeordnete Einheit einzubauen, dass es nicht bezüglich seiner Referenzachse 14, die z.B. durch Linsenfassungen oder ein Objektivgehäuse vorgegeben sein kann, sondern bezüglich seiner optischen Achse 16' in der übergeordneten Einheit justiert wird.

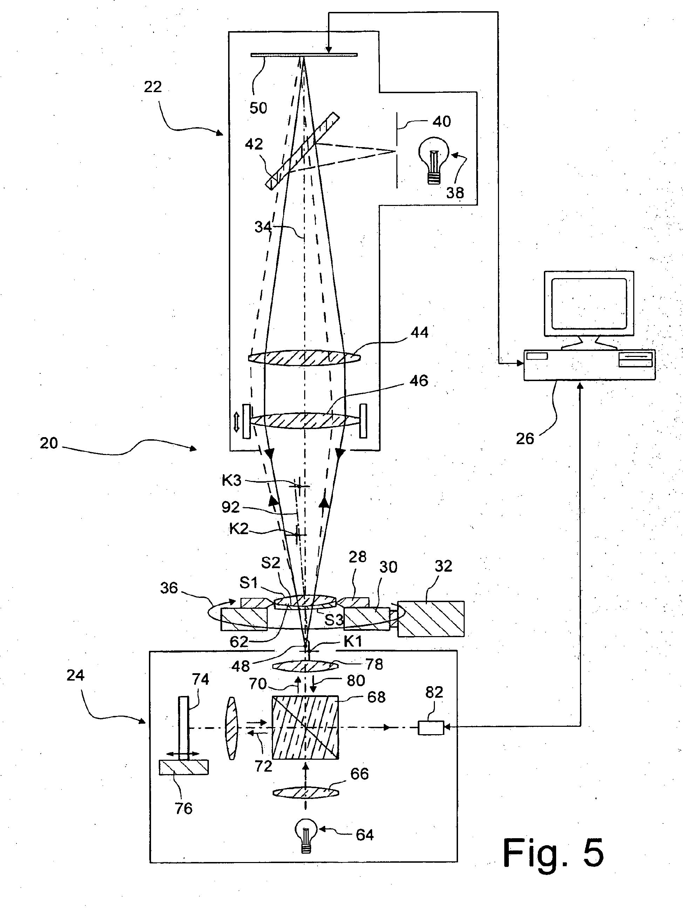

Um ggf. einzelne Linsen eines optischen Systems oder das optische System insgesamt nachjustieren zu können, aber auch zur regelmäßigen Qualitätssicherung wird eine erfindungsgemäße Messvorrichtung eingesetzt, mit der sich die Positionen der Krümmungsmittelpunkte der optischen Flächen mit hoher Genauigkeit messen lassen. Aus den Positionen der Krümmungsmittelpunkte lassen sich die Lagen der optischen Achsen der Einzellinsen und deren Abweichung von einer Referenzachse 14 bestimmen. Ferner ist es möglich, daraus abgeleitete Größen zu bestimmen, etwa die Krümmungsradien der optischen Flächen. Im folgenden Abschnitt 2. wird zunächst der Aufbau der erfindungsgemäßen Messvorrichtung mit Bezug auf die Figuren 5 bis 8 erläutert, bevor im Abschnitt 3. auf das Messverfahren eingegangen wird.

*2. Aufbau der Messvorrichtung*

Die in der Figur 5 in einem Meridionalschnitt gezeigte und insgesamt mit 20 bezeichnete Messvorrichtung umfasst einen als Winkelmesseinrichtung verwendeten Autokollimator 22, ein als Abstandsmesseinrichtung verwendetes Interferometer 24 und eine Recheneinheit in Form eines Computers 26. Zur Messvorrichtung 20 gehört ferner eine Prüflingsaufnahme 28, die von einem ringförmigen Drehtisch 30 gehalten wird. Der Drehtisch 30 ist, zusammen mit der darauf angeordneten Prüflingsaufnahme 28, mit Hilfe eines Motors 32 um eine Bezugsachse 34 drehbar, wie dies durch einen Pfeil 36 angedeutet ist. Der Drehtisch 30 bildet zusammen mit dem Motor 32 eine Drehmechanik der Messvorrichtung 20.

Der Autokollimator 22 enthält eine Lichtquelle 38, die eine Lochblende 40 mit Winkel-Messlicht ausleuchtet. Das aus der Lochblende 40 austretende Winkel-Messlicht wird über einen Strahlteiler 42 auf eine Kollimatorlinse 44 gerichtet und verlässt diese als achsparalleles Strahlenbündel. Eine entlang der Bezugsachse 34 verfahrbare Zoomlinse 46 bündelt das achsparallele Winkel-Messlicht in einem Brennpunkt 48. Im Brennpunkt 48 entsteht somit ein Bild der Lochblende 40. Wird anstelle der Lochblende 40 eine Blende mit einer anders geformten Öffnung, z. B. einer Kreuzschlitzöffnung, gewählt, so entsteht in der Brennebene der Zoomlinse 46 ein Bild des Kreuzschlitzes.

Auf der rückwärtigen Seite des Strahlteilers 42 ist ein Bildsensor 50 angeordnet, worunter hier ein lichtempfindlicher ortsauflösender Sensor verstanden wird. Geeignet als Bildsensor sind beispielsweise an sich bekannte CCD- oder CMOS-Sensoren.

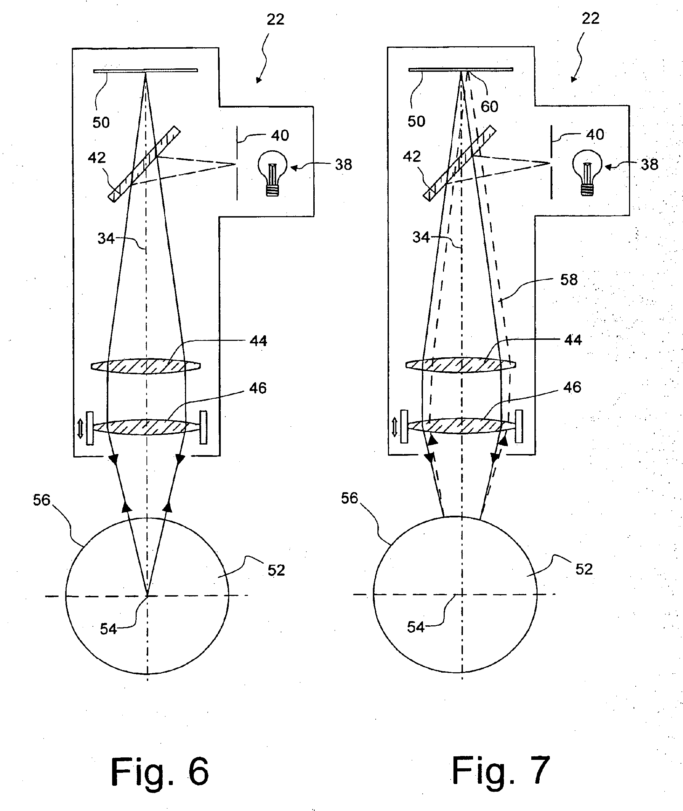

Die Funktion des Autokollimator 22 wird im Folgenden mit Bezug auf die Figuren 6 und 7 erläutert. Das aus dem Autokollimator 22 austretende Winkel-Messlicht ist hier auf einen Prüfling gerichtet, bei dem es sich der Einfachheit halber um eine Kugel 52 handelt. Liegt das Bild der Lochblende 40 exakt im Mittelpunkt 54 der Kugel 52, so bedeutet dies, dass das von dem Autokollimator 22 ausgehende Winkel-Messlicht stets senkrecht auf die Oberfläche 56 der Kugel 52 fällt. Folglich wird dieses Winkel-Messlicht an der Oberfläche 56 der Kugel in sich zurückreflektiert, durchtritt die Zoomlinse 46, die Kollimatorlinse 44 und zu einem Teil auch den Strahlteiler 42 und erzeugt auf dem Bildsensor 50 ein Bild der Lochblende 40, das zur Bezugsachse 34 zentriert ist.

Die Figur 7 zeigt den Strahlengang für den Fall, dass die Kugel 52 senkrecht zur Bezugsachse 34 verlagert wurde. Infolge dieser Verlagerung treffen die Lichtstrahlen nun nicht mehr senkrecht auf die Oberfläche 56 der Kugel 52 auf und werden deswegen auch nicht in sich zurückreflektiert. Das reflektierte, in der Figur 7 gestrichelt angedeutete Winkel-Messlicht 58 erzeugt deswegen auf dem Bildsensor 50 ein Bild 60 der Lochblende 40, das senkrecht zur Bezugsachse 34 verschoben ist.

Wird die Kugel 52 nun auf dem Drehtisch 30 um die Bezugsachse 34 gedreht, so beschreibt das Bild 60 auf dem Bildsensor 50 eine Kreisbahn. Aus der Lage des Mittelpunkts dieser Kreisbahn relativ zur Bezugsachse lässt sich ermitteln, wo der Mittelpunkt 54 der Kugel 52 relativ zur Bezugsachse 34 liegt.

Da die Dezentrierung der Kugel 52 letztlich eine Verkippung des dem Autokollimator 22 zugewandten Teils der Oberfläche 56 bedeutet, misst der Autokollimator 22 letztlich den Winkel, den die Oberfläche 56 der Kugel 52 zur Bezugsachse 34 einschließt. Der Autokollimator stellt deswegen im weiteren Sinne eine Winkelmesseinrichtung dar. Dementsprechend können auch andere berührungslos arbeitende Winkelmesseinrichtungen anstelle des Autokollimators 22 eingesetzt werden.

Bei Linsen mit sphärischen Flächen funktioniert dieser Messvorgang in gleicher Weise, nur dass die Messung nicht wie bei einer Kugel die Position eines Kugelmittelpunkts, sondern die Position des Krümmungsmittelpunkts der betreffenden sphärischen Fläche ergibt.

Im Folgenden wird wieder Bezug auf die Figur 5 genommen. Bei dem dort gezeigten Ausführungsbeispiel ist der Einfachheit halber angenommen, dass der mit 62 bezeichnete Prüfling nur aus der in der Figur 1 gezeigten Dublette besteht, die aus den Linsen L3 und L4 zusammengesetzt ist. Der Prüfling 62 hat somit drei zu vermessende optische Flächen S1, S2 und S3, deren Krümmungsmittelpunkte mit K1, K2 und K3 bezeichnet sind. Wie man in der Figur 5 erkennen kann, liegen diese Krümmungsmittelpunkte K1, K2 und K3 weder auf der Bezugsachse 34 noch exakt auf einer anderen Geraden.

Im Folgenden wird der Aufbau des Interferometers 24 näher erläutert. Das Interferometer 24 ist als Kurzkohärenz-Interferometer ausgebildet und enthält zu diesem Zweck eine im Vergleich zu einer Laserlichtquelle spektral breitbandige Lichtquelle 64, bei der es sich z. B. um eine Superlumineszenzdiode handeln kann. Infolge der vergleichsweise großen spektralen Bandbreite hat das von der Lichtquelle 64 erzeugte Licht eine wesentliche kürzere Kohärenzlänge als Licht, das von Laserlichtquellen erzeugt wird. Alternativ kann eine Laserlichtquelle verwendet werden, die extrem kurze Lichtpulse erzeugt, da auch solche Lichtpulse eine sehr kurze Kohärenzlänge haben.

Von der Lichtquelle 64 erzeugtes Abstands-Messlicht wird von einer Sammellinse 66 gebündelt und auf einen Strahlteilerwürfel 68 gerichtet, der das Abstands-Messlicht in einen auf den Prüfling 62 gerichteten Messlichtstrahl 70 und einen Referenzlichtstrahl 72 aufteilt. Der Referenzlichtstrahl 72 wird von einem Spiegel 74 in sich reflektiert, der mit Hilfe eines Aktuators 76 entlang der Strahlrichtung verfahrbar ist. Auf diese Weise lässt sich die optische Weglänge des Referenzlichtstrahls 72 zwischen dem Strahlteilerwürfel 68 und dem Spiegel 74 verändern.

Der Messlichtstrahl 70 wird über eine Optik 78 auf den Prüfling 62 gerichtet. Das an den optischen Flächen S1, S2 und S3 reflektierte Messlicht 80 gelangt zurück über die Optik 78 auf den Strahlteilerwürfel 68 und wird von diesem teilweise in Richtung eines Photodetektors 82 reflektiert. Dort überlagert sich das reflektierte Messlicht 80 mit dem vom Spiegel 74 reflektierten Referenzlichtstrahl 72.

Liegt die Differenz der optischen Weglängen, die der Messlichtstrahl 70 und der Referenzlichtstrahl 72 bis zu ihrem Weg auf den Photodetektor 82 zurückgelegt haben, in der Größenordnung der Kohärenzlänge des von der Lichtquelle 64 erzeugten Abstands-Messlicht, so kommt es zu Interferenzerscheinungen, die vom Photodetektor 82 erfasst werden. Da die Kohärenzlänge des von der Lichtquelle 64 erzeugten Abstands-Messlichts kurz ist, erzeugt der Photodetektor 82 weglängenmäßig scharf begrenzte Ausgangssignale, wenn die vorstehend genannte Bedingung erfüllt ist.

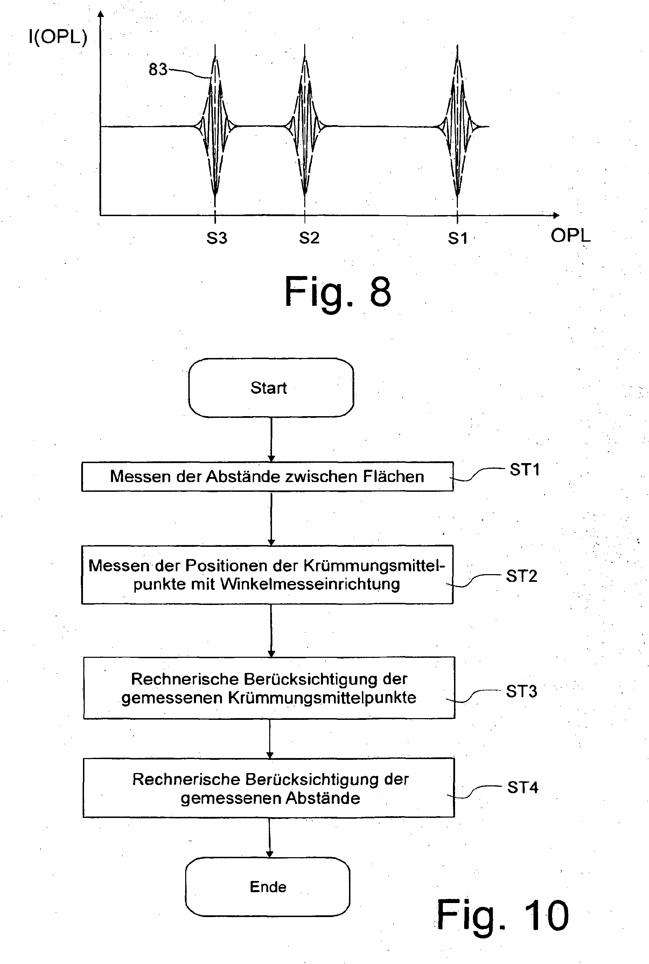

Die Figur 8 zeigt beispielhaft einen Graphen, in dem die vom Photodetektor 82 erfasste Intensität I über der optischen Weglänge OPL aufgetragen ist, die der Referenzlichtstrahl 72 zurücklegt. Diese optische Weglänge wird durch Verfahren des Spiegels 74 während der Messung verändert. Immer dann, wenn die optischen Weglängen des Messlichtstrahls 70 und des Referenzstrahls 72 übereinstimmen, lässt sich ein Interferenzsignal am Photodetektor 82 erfassen. Auf der Abszisse sind die Flächen S3, S2 und S1 angegeben, die zu den entsprechenden Interferenzsignalen am Photodetektor 82 geführt haben.

Aus den Positionen der Maxima der Hüllkurven 83 der Messsignale lassen sich unter Berücksichtigung des Gruppenbrechungsindex die Abstände zwischen den Flächen S1, S2 und S3 mit sehr hoher Genauigkeit bestimmen.

Bei realen Messsignalen liegen zwischen den Hüllkurven 83 im Allgemeinen weitere Interferenzsignale, die z. B. von Mehrfachreflexen innerhalb des Prüflings 62 verursacht sind und teilweise relativ hohe Pegel erreichen können. Damit solche Störsignale die Messung nicht beeinträchtigen, können mit Hilfe von Diskriminatorfenstern, die um die Hüllkurven 83 gelegt werden, die Störsignale ausgeblendet werden. Die Diskriminatorfenster werden vorzugsweise automatisch dort positioniert, wo Interferenzsignale unter Zugrundelegung der Soll-Abstände zwischen den Flächen S1, S2, S3 zu erwarten sind. Damit möglichst viel Messlicht von den Flächen S1, S2, S3 des Prüflings 62 reflektiert und dem Photodetektor 82 zugeleitet werden kann, kann der Messlichtstrahl 70 mit Hilfe der Optik 78 an den Prüfling 62 angepasst werden.

Weitere Einzelheiten zur Vermessung von Dicken transparenter Körper mit Hilfe eines Kurzkohärenz-Interferometers können der FR 2 803 027 A1 entnommen werden. Im Prinzip geeignete Kurzkohärenz-Interferometer werden u. a. von der Firma FOGALE nanotech, Nimes, Frankreich, angeboten.

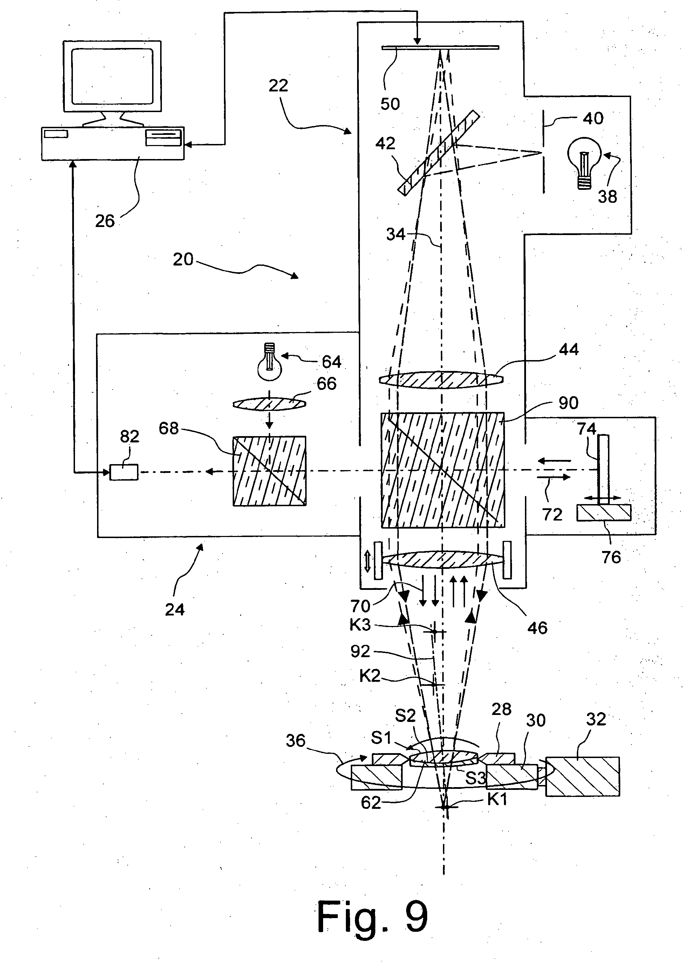

Die Figur 9 zeigt eine erfindungsgemäße Messvorrichtung 20 gemäß einem anderen Ausführungsbeispiel, bei dem das Interferometer 24 auf der gleichen Seite des Prüflings 62 wie der Autokollimator 22 angeordnet ist. Dementsprechend werden die Messungen der Positionen der Krümmungsmittelpunkte K1, K2, K3 der optischen Flächen S1, S2, S3 und deren Abstände voneinander von der gleichen Seite des Prüflings 62 aus durchgeführt.

Zu diesem Zweck weist die Messvorrichtung 20 einen zweiten Strahlteilerwürfel 90 auf, der das vom ersten Strahlteilerwürfel 68 reflektierte Licht in den Messlichtstrahl 70 und den Referenzstrahl 72 aufteilt. Der erste Strahlteilerwürfel 68 hat bei diesem Ausführungsbeispiel lediglich die Aufgabe, das von der Lichtquelle 64 erzeugte Licht in denjenigen Arm des Interferometers 24 einzukoppeln, der den Photodetektor 82 enthält. Die Zoomlinse 46 dient bei diesem Ausführungsbeispiel sowohl der Fokussierung des Winkel-Messlichts als auch des Abstands-Messlichts 70.

Ansonsten sind die in den Figuren 5 und 9 gezeigten Messvorrichtungen 20 funktionsgleich.

*3. Messverfahren*

Im Folgenden wird das erfindungsgemäße Messverfahren mit Bezug auf das in der Figur 10 gezeigte Flussdiagramm näher erläutert.

a) Vorjustage

Vorausgesetzt wird zunächst, dass die optische Achse des Autokollimators 22, die Drehachse des Drehtischs 30 und der Messlichtstrahl 70 des Interferometers 24 so zueinander ausgerichtet sind, dass sie auf der gemeinsamen Bezugsachse 34 liegen. Eine solche Justierung erfolgt nur einmalig vor der erstmaligen Inbetriebnahme der Messvorrichtung 20.

Um zunächst eine Parallelität der Drehachse des Drehtischs 30 mit der optischen Achse des Autokollimators 22 zu erzielen, kann über die Öffnung des Drehtischs 30 ein Planspiegel gelegt werden. Der Autokollimator 22 und der Drehtisch 30 werden dann so lange zueinander justiert, bis das Bild der Lochblende 40 auf dem Bildsensor 50 exakt zur optischen Achse des Autokollimators 22 zentriert ist.

In einem zweiten Schritt wird in die Öffnung des ringförmigen Drehtisches 30 eine Kugellinse eingesetzt, um eine exakt koaxiale Ausrichtung der optischen Achse des Autokollimators 22 und der Drehachse des Drehtisches 30 zu erzielen. Der Autokollimator 22 und der Drehtisch 30 werden dann so lange zueinander justiert, bis das Bild der Lochblende 40 auf dem Bildsensor 50 wieder zur optischen Achse des Autokollimators zentriert ist.

In gleichartiger Weise kann auch das Interferometer 24 relativ zum Drehtisch 30 ausgerichtet werden. Eine optimale Ausrichtung auf die gemeinsame Bezugsachse 34 ist dann erreicht, wenn bei Einsetzen eines Planspiegels und einer Kugellinse die vom Photodetektor 82 erfasste Intensität jeweils maximal ist.

b) Abstandsmessung

Zur Messung der Positionen der Krümmungsmittelpunkte des mehrlinsigen Prüflings 62 werden zunächst in einem Schritt ST1 die Abstände zwischen den Flächen S1, S2, S3 mit Hilfe des Interferometers 24 gemessen. Um reproduzierbare und genaue Messergebnisse zu erhalten, muss dabei jedoch der Messlichtstrahl 70 des Interferometers 24 sehr genau zur optischen Achse des Prüflings 62 ausgerichtet sein. Denn nur wenn der Messlichtstrahl 40 senkrecht auf die optischen Flächen S1, S2, S3 fällt, gelangt genügend von den Flächen S1, S2, S3 reflektiertes Messlicht zurück auf den Photodetektor 82 und kann dort zur Interferenz mit dem Referenzlichtstrahl 72 beitragen. Dies wiederum ist gleichbedeutend mit der Förderung, dass die Krümmungsmittelpunkte K1, K2, K3 auf der Bezugsachse 34 liegen.

Im Allgemeinen ist diese Voraussetzung jedoch nicht gegeben, weil der Prüfling 62 zunächst verkippt und/oder dezentriert auf dem Drehtisch 30 gehalten ist, wie dies in der Figur 5 gezeigt ist. Deswegen wird es im Allgemeinen erforderlich sein, die Prüflingsaufnahme 28 mit dem darin aufgenommenen Prüfling 62 zunächst so relativ zum Interferometer 24 auszurichten, dass die durch die Krümmungsmittelpunkte K1, K2, K3 festgelegte optische Achse des Prüflings 62 mit der Bezugsachse 34 fluchtet. Bei bereits vorjustiertem Interferometer 24 bedeutet dies, dass die Prüflingsaufnahme 28 mit dem Prüfling 62 auf dem Drehtisch 30 verkippt und/oder verschoben wird.

Allerdings ist die optische Achse des Prüflings 62 zunächst überhaupt nicht bekannt. Es ist deswegen erforderlich, vor der Ausrichtung des Prüflings 62 relativ zum Interferometer 24 die optische Achse des Prüflings 62 vorläufig zu bestimmen. Hierzu kommen mehrere Möglichkeiten in Betracht.

i) Vorläufige Messung der Krümmungsmittelpunktspositionen

Eine Möglichkeit besteht darin, bereits vor der Messung der Abstände die Positionen der Krümmungsmittelpunkte der Flächen S1, S2, S3 vorläufig zu bestimmen und daraus eine optische Achse des Prüflings 62 abzuleiten.

Wie man mit Hilfe des Autokollimators 22 die Positionen der Krümmungsmittelpunkte misst, wird weiter unten im Abschnitt 3.c) näher erläutert.

Die Ableitung einer optischen Achse des Prüflings 62 aus vorläufig bestimmten Krümmungsmittelpunkten K1, K2, K3 kann auf verschiedene Weise erfolgen. So kann beispielsweise durch die Krümmungsmittelpunkte K1, K2, K3 eine Ausgleichsgerade gelegt werden, die als optische Achse des Prüflings 62 definiert wird. Bei der Festlegung der Ausgleichsgeraden kann auch eine Gewichtung der Krümmungsmittelpunkte K1, K2, K3 vorgenommen werden, die sich beispielsweise an den Krümmungsradien der betreffenden Flächen orientiert. In der Figur 5 ist eine so bestimmte vorläufige optische Achse durch eine gestrichelte Linie angedeutet und mit 92 bezeichnet.

Da die Bestimmung der optischen Achse 92 lediglich vorläufig ist und keine höchste Genauigkeit erfordert, kann die optische Achse 92 auch auf einfachere Weise festgelegt werden. So können beispielsweise nur die Krümmungsmittelpunkte K1 und K3 der ersten Fläche S1 bzw. der letzten Fläche S3 in der Weise berücksichtigt werden, dass die vorläufige optische Achse durch diese Krümmungsmittelpunkte hindurch verläuft.

ii) Messung in Transmission

Eine andere Möglichkeit, die optische Achse 92 des Prüflings 62 vorläufig zu bestimmen, besteht darin, den Prüfling 62 in Transmission zu durchleuchten. Hierzu wird die Weißlichtquelle 64 des Interferometers 24 genutzt, um einen Prüflichtstrahl auf den Prüfling 62 zu richten. Der Prüflichtstrahl durchtritt den Prüfling 62 sowie die Zoomlinse 46, die Kollimatorlinse 44 und den Strahlteiler 42 und erzeugt auf dem Bildsensor 50 einen Lichtfleck. Liegen die Krümmungsmittelpunkte K1, K2, K3 auf der Bezugsachse 34, dann durchtritt der Prüflichtstrahl die optischen Flächen S1, S2, S3 senkrecht und breitet sich folglich geradlinig entlang der Bezugsachse 34 aus.

Im Allgemeinen jedoch liegen die Krümmungsmittelpunkte K1, K2, K3 nicht exakt auf der Bezugsachse 34. Dann trifft der Prüflichtstrahl nicht senkrecht, sondern schräg auf die Flächen S1, S2, S3 auf, so dass er beim Durchtritt durch den Prüfling 62 infolge Brechung an den Flächen S1, S2, S3 abgelenkt wird. Infolge dieser Ablenkung verlagert sich auch der Lichtfleck auf dem Bildsensor 50 von der Bezugsachse 34 weg.

Wird nun während einer solchen Durchleuchtung des Prüflings 62 mit Prüflicht der Prüfling 62 mit Hilfe des Drehtischs 30 um die Bezugsachse 34 gedreht, so wandert auch der Lichtfleck auf dem Bildsensor 50 um die Bezugsachse 34 herum. Aus der Bahn dieses Lichtflecks kann man allerdings nicht quantitativ auf die Positionen der Krümmungsmittelpunkte K1, K2, K3 schließen. Wird die Prüflingsaufnahme 28 mit dem darin aufgenommenen Prüfling 62 jedoch so lange verkippt und/oder verschoben, bis die Kreisbahn des Lichtflecks auf dem Bildsensor 50 einen minimalen Durchmesser hat, so ist auch der Abstand der Krümmungsmittelpunkte K1, K2, K3 von der Bezugsachse 34 minimal. Die optische Achse des Prüflings 62 ist dann in der gewünschten Weise gut zur Bezugsachse 34 der Messvorrichtung 20 ausgerichtet.

iii) Simulation

Eine weitere Möglichkeit zur Justierung des Prüflings 28 auf dem Drehtisch 30 besteht darin, ähnlich wie bei der Variante i) mit Hilfe des Autokollimators 22 die Positionen der Krümmungsmittelpunkte K1, K2, K3 der Flächen S1, S2, S3 des Prüflings 62 vorläufig zu bestimmen. Im Wege einer Simulation, z. B. durch Ray-Tracing-Verfahren, wird dann ermittelt, welche Intensitäten am Photodetektor 82 zu erfassen wären, wenn der Prüfling 62 mit den vorab gemessenen Krümmungsmittelpunkten K1, K2, K3 optimal auf den Drehtisch 92 ausgerichtet wäre. Eine solche optimale Ausrichtung kann dadurch definiert sein, dass die Krümmungsmittelpunkte K1, K2, K3 sich dann im Mittel möglichst nahe der Bezugsachse 34 befinden; ggf. kann hier auch ein abgewandeltes Kriterium verwendet werden. Die Verkippung und/oder Verschiebung des Prüflings 62 auf dem Drehtisch 30 wird dann so lange durchgeführt, bis vom Photodetektor 82 die vorab berechneten Intensitäten erfasst werden.

Nachdem also der Prüfling 62 nach einer der drei vorstehend erläuterten Varianten i) bis iii) optimal zur Bezugsachse 34 der Messvorrichtung 20 ausgerichtet wurde, werden die Abstände zwischen den Flächen S1, S2, S3 mit Hilfe des Interferometers 24 gemessen. Hierzu wird in der oben bereits beschriebenen Weise die optische Weglänge des Referenzlichtstrahls 72 durch Verfahren des Spiegels 74 durchgestimmt und das Interferenzsignal des Photodetektors 82 erfasst und ausgewertet.

c) Messen der Positionen der Krümmungsmittelpunkte

In einem zweiten Schritt ST2 werden die Positionen der Krümmungsmittelpunkte K1, K2, K3 der Flächen S1, S2, S3 mit Hilfe des Autokollimators 22 vermessen. Hierbei wird wie folgt vorgegangen:

Um bei einem mehrlinsigen Prüfling 62 die Positionen der Krümmungsmittelpunkte K1, K2 und K3 der optischen Flächen S1, S2, S3 zu messen, müssen mehrere Messvorgänge nacheinander durchgeführt werden. Begonnen wird dabei z. B. mit derjenigen optischen Fläche, die dem Autokollimator 22 am nächsten liegt. Bei dem Prüfling 62 ist dies die Fläche S1.

Zur Bestimmung der Position des Krümmungsmittelspunkts der Fläche S1 wird die Zoomlinse 46 des Autokollimators 22 so verfahren, dass der Brennpunkt 48 des Winkel-Messlichts in der Nähe des auf der Grundlage der Designdaten erwarteten Krümmungsmittelpunkts liegt. Dann wird der Drehtisch 30 in Rotation gesetzt und die Wanderung des Bildes der Lochblende 40 auf dem Bildsensor 50 aufgezeichnet. Wie oben bereits mit Bezug auf die Figuren 6 und 7 im Abschnitt 2 erläutert wurde, lässt sich die Position des Krümmungsmittelpunkts K1 der Fläche S1 aus dem Mittelpunkt der Kreisbahn ableiten, auf der das Bild der Lochblende 40 auf dem Bildsensor 50 während der Drehung des Prüflings um die Bezugsachse 34 wandert.

Nachdem die Position des Krümmungsmittelpunkts K1 der ersten Fläche S1 ermittelt wurde, wird die Zoomlinse 46 so verfahren, dass der Brennpunkt 48 des Winkel-Messlichts zumindest annähernd im Krümmungsmittelpunkt K2 der in Lichtausbreitungsrichtung folgenden Fläche S2 zu liegen kommt. Da das vom Autokollimator 22 ausgehende Winkel-Messlicht nun aber zusätzlich auch die zuvor bereits vermessene Fläche S1 durchtritt, müssen die bei der zweiten Messung erhaltenen Messwerte rechnerisch um die optische Wirkung der ersten Fläche S1 korrigiert werden. Rechnerisch berücksichtigt werden dabei in einem Schritt ST3 die Position des Krümmungsmittelpunkts K1 der bereits vermessenen Fläche S1 und in einem Schritt ST4 der bereits mit Hilfe des Interferometers 24 gemessene Abstand zwischen den beiden Flächen S1 und S2 entlang der Bezugsachse 34, wobei die Schritte ST3 und ST4 im Allgemeinen Teil einer gemeinsamen Korrekturrechnung am Ende des gesamten Messvorgangs sein werden.

Bei der Bestimmung der optischen Wirkung der ersten Fläche S1 wird in der Regel der Krümmungsradius dieser Fläche benötigt. Bei sphärischen Linsen können die Krümmungsradien aus den Positionen der Krümmungsmittelpunkte K1, K2, K3 und den Abständen der Flächen S1, S2, S3 unmittelbar abgeleitet werden. Alternativ können die Krümmungsradien auch den Design-Daten der Fläche S1 entnommen oder in einem zusätzlichen Messvorgang mit Hilfe des Autokollimators 22 gemessen werden. Der Krümmungsradius ist nämlich bei einer sphärischen Linse gleich dem Abstand zwischen dem Krümmungsmittelpunkt K1 und einem beliebigen Punkt auf der optischen Fläche S1. Die Position eines solchen Punkts kann einfach dadurch gemessen werden, indem der Brennpunkt 48 der Zoomlinse 46 auf die optische Fläche S1 gelegt wird. Das auf dem Bildsensor 50 entstehende Bild der Lochblende 40 hat dann seine maximale Intensität.

Hervorzuheben ist, dass für den ebenfalls zu berücksichtigenden Abstand zwischen der ersten Fläche S1 und der zweiten Fläche S2 entlang der Bezugsachse 34 nicht wie im Stand der Technik auf Designdaten, sondern auf den zuvor mit Hilfe des Interferometers 24 ermittelten Messwert für diesen Abstand zurückgegriffen wird.

Bei allen weiteren optischen Flächen des Prüflings 62 erfolgt die Messung der Positionen der Krümmungsmittelpunkte in gleicher Weise. Es werden dabei stets die Positionen der Krümmungsmittelpunkte aller vorausliegenden Flächen und die von dem Interferometer gemessenen Abstände zwischen den vorausliegenden Flächen gemäß den Schritten ST3 und ST4 rechnerisch berücksichtigt. Auf diese Weise erhält man eine räumliche Anordnung aller Krümmungsmittelpunkte K1, K2 und K3.

Falls eine Vermessung der Positionen der Krümmungsmittelpunkte K1, K2, K3 bereits zuvor durchgeführt wurde, um die optische Achse 92 des Prüflings 62 vorläufig bestimmen und den Prüfling 62 zum Zwecke der Abstandsmessung an der Bezugsachse 34 ausrichten zu können, kann diese Messung im Schritt ST2 wiederholt werden, da unter Umständen mit dem nun besser ausgerichteten Prüfling 62 eine höhere Genauigkeit bei der Messung der Positionen der Krümmungsmittelpunkte K1, K2, K3 erreicht wird. Es ist aber alternativ hierzu ebenfalls möglich, die bereits erhaltenen Messergebnisse, d. h. die auf dem Bildsensor 50 für die einzelnen Flächen S1, S2, S3 erhaltenen Lichtmuster, zu verwenden und die zuvor im Schritt ST1 genau vermessenen Abstände zwischen den Flächen S1, S2, S3 lediglich bei der rechnerischen Auswertung zu berücksichtigen. Die Schritte ST1 und ST2 werden dann in umgekehrter Reihenfolge durchgeführt.

Ferner kann es zweckmäßig sein, die Messung der Positionen der Krümmungsmittelpunkte K1, K2, K3 nicht wie vorstehend beschrieben in der Reihenfolge der optischen Flächen S1, S2, S3, sondern in der Reihenfolge deren Soll-Krümmungsmittelpunkte durchzuführen. Bei dem in der Figur 5 gezeigten Prüfling würde dies bedeuten, dass der Brennpunkt 48 des Autokollimator 22 nicht zunächst in den erwarteten Krümmungsmittelpunkt K1 der ersten Fläche S1, sondern in den dem Autokollimator 22 nächstliegenden Krümmungsmittelpunkt K3 der Fläche S3 gelegt wird. Nach Abschluss dieses Messschritts wird die Zoomlinse 46 so verfahren, dass der Brennpunkt 48 annähernd in den am zweitnächsten liegenden Krümmungsmittelpunkt - hier der Krümmungsmittelpunkt K2 der zweiten Fläche S2 - gelegt wird, usw. Auf diese Weise wird erreicht, dass die Zoomlinse 46 zwischen den Messschritten minimale Verfahrwege zurücklegt. Aus dem gleichen Grund kann die Messung auch in der umgekehrten Reihenfolge durchgeführt werden, d. h. mit der Messung der Position desjenigen Krümmungsmittelpunktes beginnend, der vom Autokollimator am weitesten entfernt liegt. Ausgenutzt wird dabei jeweils, dass die rechnerische Berücksichtigung der gemessenen Krümmungsmittelpunktspositionen und der Abstände gemäß den Schritten ST3 und ST4 auch nach der Aufnahme aller Messdaten in einem gemeinsamen iterativen Auswertungsprozess durchgeführt werden kann.

Das Ergebnis der Messung ist eine sehr präzise Bestimmung der Krümmungsmittelpunkte des Prüflings 62, die auch nicht durch Abweichungen der tatsächlichen Abstände zwischen den optischen Flächen S1, S2, S3 von den Designdaten verfälscht wird. Aus den exakt ermittelten Krümmungsmittelpunkten und den gemessenen Abständen kann der Computer 26 auch die Krümmungsradien exakt bestimmen. Sehr genau gemessene Luftabstände und Mittendicken der Linsen des Prüflings 62 fallen zusätzlich als nützliche Messergebnisse an. Man erhält somit ausgehende von einem Designdatensatz, der u. a. Sollwerte für die Positionen der Krümmungsmittelpunkte, die Luftabstände zwischen den Linsen und die Mittendicken der Linsen enthält, einen korrigierten Ist-Datensatz, in dem die genannten Soll-Werte durch hochgenaue Messwerte ersetzt sind.

**Patentansprüche**

1. Verfahren zur Messung der Positionen von Krümmungsmittelpunkten (K1, K2, K3) optischer Flächen (S1, S2, S3) eines mehrlinsigen optischen Systems (62), umfassend die folgenden Schritte:

   a) Vorläufiges Bestimmen einer optische Achse (92) des optischen Systems (62) unter Verwendung einer Winkelmesseinrichtung (22);
   b) Ausrichten des optische System (62) zu einem Kurzkohärenz-Interferometer derart, dass die vorläufig bestimmte optische Achse (92) mit einer Bezugsachse (34) fluchtet;
   c) Messen (ST1) der Abstände zwischen den Flächen (S1, S2, S3) entlang der Bezugsachse (34) unter Verwendung des Kurzkohärenz-Interferometers (24);
   d) Messen (ST2) der Positionen der Krümmungsmittelpunkte (K1, K2, K3) der Flächen (S1, S2, S3) unter Verwendung der optischen Winkelmesseinrichtung (22), wobei bei der Messung des Krümmungsmittelpunkts einer innerhalb des optischen Systems (62) liegenden Fläche

      - die gemessenen Positionen der Krümmungsmittelpunkte der zwischen dieser Fläche und der Winkelmesseinrichtung (22) liegenden Flächen und
      - die in Schritt c) gemessenen Abstände zwischen den Flächen

   rechnerisch berücksichtigt werden (ST3, ST4).

2. Verfahren nach Anspruch 1, bei dem in Schritt a) Positionen der Krümmungsmittelpunkte (K1, K2, K3) wie in Schritt d), aber unter Annahme der Soll-Abstände zwischen den Flächen, unter Verwendung der optischen Winkelmesseinrichtung gemessen und für die vorläufige Bestimmung der optischen Achse (92) verwendet werden.

3. Verfahren nach Anspruch 1 oder 2, bei dem die optische Achse (92) vorläufig bestimmt wird, indem die Positionen der Krümmungsmittelpunkte (K1, K2, K3) zumindest einiger Flächen (S1, S2, S3) gemessen werden und die optische Achse (92) durch eine Ausgleichsgerade durch die so bestimmten Positionen der Krümmungsmittelpunkte (K1, K2, K3) festgelegt wird.

4. Verfahren nach Anspruch 1, bei dem zur vorläufigen Bestimmung der optischen Achse (92) von einer Seite des optischen Systems (62) Prüflicht eingekoppelt wird und auf der gegenüberliegenden Seite aus dem optischen System austretendes Prüflicht von einem Lichtsensor (50) der Winkelmesseinrichtung (22) ortsaufgelöst erfasst wird.

5. Verfahren nach Anspruch 4, bei dem das optische System während des ortsaufgelösten Erfassens des Prüflichts um die Bezugsachse (34) gedreht wird, und bei dem aus der Veränderung des Auftrefforts des Prüflichts auf dem Lichtsensor (50) während der Drehung auf die Abweichung der optischen Achse (98) von der Bezugsachse (34) geschlossen wird.

6. Verfahren nach Anspruch 4 oder 5, bei dem das Prüflicht von einer in dem Interferometer (22) angeordneten Lichtquelle (64) erzeugt wird.

7. Verfahren nach einem der vorhergehenden Ansprüche, bei dem die Messung der Abstände in Schritt a) und die Messung der Positionen der Krümmungsmittelpunkte (K1, K2, K3) in Schritt b) von der gleichen Seite des optischen Systems (62) aus durchgeführt wird.

8. Verfahren nach Anspruch 7, bei dem von dem Interferometer (24) verwendetes Abstands-Messlicht und von der Winkelmesseinrichtung (22) verwendetes Winkel-Meslslicht von der gleichen Fokussieroptik (90) auf das optische System (92) gerichtet werden.

**Claims**

1. Method for measuring the positions of centers of curvature (K1, K2, K3) of optical surfaces (S1, S2, S3) of a multi-lens optical system (62), comprising the following steps:

   a) provisionally determining an optical axis (92) of the optical system (62) using an angle-measuring device (22);
   b) orienting the optical system (62) with respect to a short-coherence interferometer in such a way, that the provisionally determined optical axis (92) is aligned with a reference axis (34);
   c) measuring (ST1) the spacings between the surfaces (S1, S2, S3) along the reference axis (34) using the short-coherence interferometer (24);
   d) measuring (ST2) the positions of the centers of curvature (K1, K2, K3) of the surfaces (S1, S2, S3) using the optical angle-measuring device (22), wherein in the course of a measurement of the center of curvature of a surface situated within the optical system (62)

      - the measured positions of the centers of curvature of the surfaces situated between this surface and the angle-measuring device (22) and
      - the spacings between the surfaces measured in step c)

   are taken into consideration computationally (ST3, ST4).

2. Method according to claim 1, wherein in step a) positions of the centers of curvature (K1, K2, K3) are measured like in step d), but under the assumption of the nominal spacings between the surfaces, using the optical angle-measuring device and are used for provisionally determining the optical axis (92).

3. Method according to claim 1 or 2, wherein the optical axis is provisionally determined, wherein the positions of the centers of curvature (K1, K2, K3) of at least some of the surfaces (S1, S2, S3) are measured and the optical axis (92) is defined by a regression line through the positions of the centers of curvature (K1, K2, K3) that have thus been provisionally measured.

4. Method according to claim 1, wherein, for the purpose of provisional determination of the optical axis (92), test light is coupled in from one side of the optical system (62), and on an opposite side test light emanating from the optical system is detected in a location-resolved manner by a light-sensor (50) of the optical angle-measuring device (22).

5. Method according to claim 4, wherein the optical system is rotated about the reference axis (34) during the location-resolved detection of the test light, and wherein from the change in the location of impingement of the test light on the light-sensor (50) during the rotation the deviation of the optical axis (98) from the reference axis (34) is inferred.

6. Method according to claim 4 or 5, wherein the test light is generated by a light-source (64) arranged in the interferometer (22).

7. Method according to one of the preceding claims, wherein the measurement of the spacings in step a) and the measurement of the positions of the centers of curvature (K1, K2, K3) in step b) are carried out from the same side of the optical system (62).

8. Method according to claim 7, wherein spacing-measuring light used by the interferometer (24) and angle-measuring light used by the angle-measuring device (22) are directed onto the optical system (92) by common focusing optics (90).

**Revendications**

1. Procédé de mesure des positions de centres de courbure (K1, K2, K3) de surfaces optiques (S1, S2, S3) d'un système optique (62) à plusieurs lentilles, comprenant les étapes suivantes :

   a) détermination provisoire d'un axe optique (92) du système optique (62) en utilisant un dispositif de mesure d'angle (22) ;
   b) orientation du système optique (62) par rapport à un interféromètre à cohérence courte de façon que l'axe optique (92) provisoirement déterminé soit aligné avec un axe de référence (34) ;

c) mesure (ST1) des distances entre les surfaces (S1, S2, S3) le long de l'axe de référence (34) en utilisant l'interféromètre à cohérence courte (24) ;

d) mesure (ST2) des positions des centres de courbure (K1, K2, K3) des surfaces (S1, S2, S3) en utilisant le dispositif optique de mesure d'angle (22), sachant que lors de la mesure du centre de courbure d'une surface située à l'intérieur du système optique (62)

- les positions mesurées des centres de courbure des surfaces situées entre cette surface et le dispositif de mesure d'angle (22) et
- les distances mesurées à l'étape c) entre les surfaces

sont prises en compte dans le calcul (ST3, ST4).

2. Procédé selon la revendication 1, selon lequel, à l'étape a), les positions des centres de courbure (K1, K2, K3) sont mesurées comme à l'étape d), mais en admettant les distances de consigne entre les surfaces, en utilisant le dispositif optique de mesure d'angle et utilisées pour la détermination provisoire de l'axe optique (92).

3. Procédé selon la revendication 1 ou 2, selon lequel l'axe optique (92) est déterminé provisoirement en mesurant les positions des centres de courbure (K1, K2, K3) au moins de certaines surfaces (S1, S2, S3) et en définissant l'axe optique (92) par une droite d'ajustexnent passant par les positions ainsi déterminées des centres de courbure (K1, K2, K3).

4. Procédé selon la revendication 1, selon lequel, pour la détermination provisoire de l'axe optique (92), une lumière de contrôle est couplée d'un côté du système optique (62) et la lumière de contrôle sortant du système optique du côté opposé est détectée à résolution spatiale par un capteur de lumière (50) du dispositif de mesure d'angle (22).

5. Procédé selon la revendication 4, selon lequel le système optique est tourné autour de l'axe de référence (34) pendant la détection à résolution spatiale de la lumière de contrôle, et selon lequel la déviation de l'axe optique (98) par rapport à l'axe de référence (34) est déduite de la modification du lieu d'incidence de la lumière de contrôle sur le capteur de lumière (50) pendant la rotation.

6. Procédé selon la revendication 4 ou 5, selon lequel la lumière de contrôle est produite par une source de lumière (64) disposée dans l'interféromètre (22).

7. Procédé selon l'une des revendications précédentes, selon lequel la mesure des distances à l'étape a) et la mesure des positions des centres de courbure (K1, K2, K3) à l'étape b) sont effectuées du même côté du système optique (62).

8. Procédé selon la revendication 7, selon lequel la lumière de mesure de distance utilisée par l'interiéromètre (24) et la lumière de mesure d'angle utilisée par le dispositif de mesure d'angle (22) sont dirigées sur le système optique (92) par la même optique de focalisation (90).

**Fig. 1**

**Fig. 2**

**Fig. 3**

**Fig. 4**

Fig. 5

Fig. 6

Fig. 7

I(OPL)

83

S3    S2    S1    OPL

# Fig. 8

```
          Start
            │
            ▼
  Messen der Abstände zwischen Flächen ───── ST1
            │
            ▼
  Messen der Positionen der Krümmungsmittel-
  punkte mit Winkelmesseinrichtung ───── ST2
            │
            ▼
  Rechnerische Berücksichtigung der
  gemessenen Krümmungsmittelpunkte ───── ST3
            │
            ▼
  Rechnerische Berücksichtigung der
  gemessenen Abstände ───── ST4
            │
            ▼
          Ende
```

# Fig. 10

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004029735 A1

- FR 2803027 A1

**In der Beschreibung aufgeführte Nicht-Patentliteratur**

- **A. COURTEVILLE et al.** Non-contact in-process metrology using a high accuracy low coherence interferometer. *Laser and Machine Performance VII, 7th International Conference and Exhibition on Laser Metrology, Machine Tool, CMM and Robotic Performance Lamdamap 2005,* 2005, 534-544